# EUROPEAN PATENT APPLICATION

(11) **EP 1 354 801 A1**
(43) Date of publication of application: **22.10.2003**
(21) Application number: 01998485.5
(22) Date of filing: 29.11.2001
(51) Int. Cl.: B65D 1/00, B65D 1/02, B65D 1/42

(54) **BIAXIALLY STRETCH-BLOW MOLDED LIGHTWEIGHT SYNTHETIC RESIN BOTTLE CONTAINER AND METHOD FOR PRODUCTION THEREOF**

(30) Priority: 29.11.2000 JP 2000362471
(71) Applicant: Yoshino Kogyosho Co., Ltd., Tokyo 136-8531 (JP)
(72) Inventor: KATO, Toyoji, c/o Yoshino Kogyosho Co., Ltd, Matsudo-Shi, Chiba 270-229 (JP); UESUGI, Daisuke, c/o Yoshino Kogyosho Co., Ltd, Matsudo-Shi, Chiba 270-2297 (JP); TSUTSUI, Naoki, c/o Yoshino Kogyosho Co., Ltd, Tokyo 136-8531 (JP); HARA, Naoto, c/o Yoshino Kogyosho Co., Ltd, Tokyo 136-8531 (JP); OZAWA, Tomoyuki, c/o Yoshino Kogyosho Co., Ltd., Tokyo 136-8531 (JP); ISHIZUKA, Tomohiko, c/o Yoshino Kogyosho Co., Ltd., Isehara-Shi, Kanagawa 259-1103 (JP); YAGUCHI, Hiromi, c/o Yoshino Kogyosho Co., Ltd., Moka-Shi, Tochigi 321-4346 (JP)
(74) Representative: Crouch, David John
(86) International application number: JP0110429
(87) International publication number: WO02044038

(57) **Abstract**

A bottle-shaped container shows a large critical strength against buckling and is made of a reduced amount of synthetic resin material. A manufacturing method can manufacture such a bottle-shaped container. A lightweight bottle-shaped container made of synthetic resin and formed by biaxially-oriented blow-molding, characterized in that a wall thickness is increased to 109% or more of an average wall thickness of blow-molded part of the wall at an inflection point (121, 122, 143-145, 164-167, 243-245, 264-267, 271-274, 283, 284, 343-345, 371-374, 391-394) between a portion having a transversal cross sectional area and a portion having a different transversal cross sectional area in a cylindrical wall. The wall is thicker between the heel (14, 24, 34) and the bottom (15, 25, 35), or at the waist (16, 26), at the recessed rib (27, 37, 39), or at the projection (28).

## Description

### FIELD OF THE INVENTION

This invention relates to a biaxially-oriented blow-molded bottle-shaped container made of synthetic resin and also to a method of manufacturing the same.

### BACKGROUND ART

Bottle-shaped containers made of synthetic resin are being popularly used in many industrial fields including beverage containers. From the viewpoint of effective exploitation of resources, reduction of manufacturing cost, and that of volume of rubbish, efforts are being paid to reduce the consumption rate of synthetic resin materials by reducing a wall thickness of bottle-shaped containers made of synthetic resin.

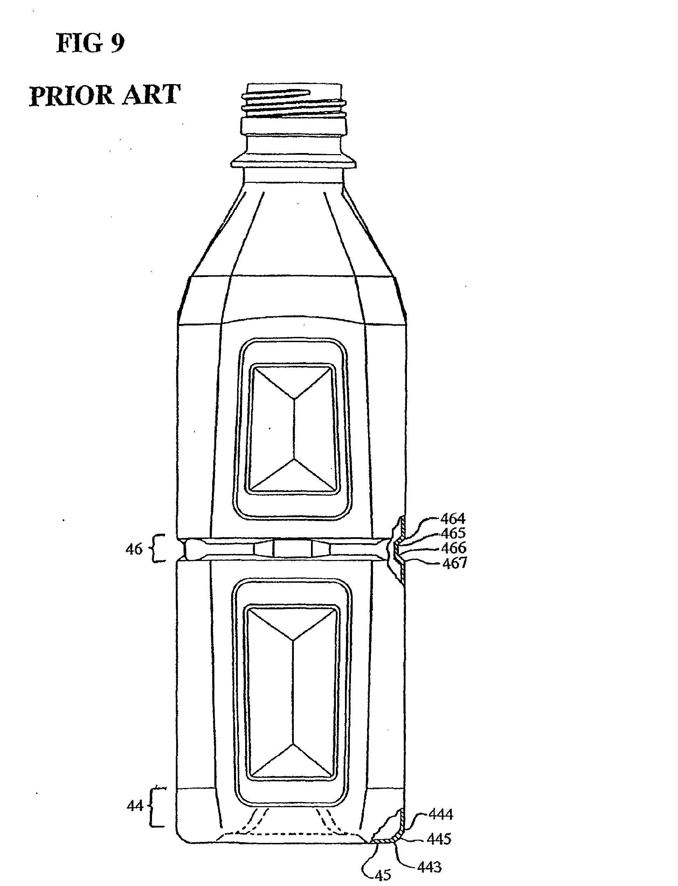

However, when bottle-shaped containers having the thin wall and filled with liquid are put on a pallet, and when such pallets are laid one on the other in layers, weight of upper pallets and the containers (including the liquid contained therein) is borne by lower layers. In other words, the bottle-shaped containers of lower layers are subjected to axial force that is applied from above. In such a condition, stress is concentrated to inflection points of the wall of each bottle-shaped container. For instance, in case of a bottle-shaped container having a profile as shown in FIG. 9 of the accompanying drawings that includes a waist 46 and shows a substantially rectangular cross section, it has inflection points 464, 465, 466, 467 at the waist 46 and also inflection points 443, 444, 445 between a heal 44 and a bottom 45 as seen from FIG. 9. When axial force is applied to the bottle-shaped container from above, the container is subjected to an outwardly directed radial component of force at the inflection points. Then, there can arise a problem of buckling deformations, so that the bottle-shaped container may become crushed at and near the waist and the bottom.

### SUMMARY OF THE INVENTION

In view of the above identified problem, it is therefore an object of the present invention to provide a bottle-shaped container having a large wall thickness at such inflection point with a reduced amount of synthetic resin material, in order to increase critical strength of the container against buckling and a method of manufacturing such a container.

According to the invention, the above object is achieved by providing a lightweight bottle-shaped container made of synthetic resin and formed by biaxially-oriented blow-molding, characterized in that a wall thickness is increased to 109% or more of an average wall thickness of blow-molded part of the wall at an inflection point between a portion having a transversal cross sectional area and a portion having a different transversal cross sectional area in a cylindrical wall.

Preferably, the wall thickness gradually changes from the inflection point to other blow-molded part of the wall.

Preferably, the bottle-shaped container comprises a neck, a shoulder, a body, a heel and a bottom, and said inflection point is between the heel and a bottom surface of the bottom. Still preferably, the wall thickness of the entire bottom surface is at least 109% of said average wall thickness.

The inflection point may be between the shoulder and the body.

If the body is formed with a waist, and if the body comprises an upper body located above the waist and a lower body located below the waist, the inflection point is between the upper body and the waist, and the inflection point is also between the lower body and the waist, preferably.

In another aspect of the invention, there is provided a method of manufacturing a lightweight bottle-shaped container made of synthetic resin, comprising heating a preform, and biaxially-oriented blow-molding the preform, characterized in that the preform is less heated at a part corresponding to an inflection point between a portion having a transversal cross sectional area and a portion having a different transversal cross sectional area in a cylindrical wall of the container, so that an area magnification from the preform to the blow-molded product is smaller at the less-heated part, so that at the inflection point, a wall-thickness has 109% or more of an average wall thickness of a blow-molded portion.

Preferably, the method comprises heating the preform, primary biaxial-orientation blow-molding the preform in a primary metal mold, to form a primary intermediate molded product; causing thermal contraction of the primary intermediate molded product by heating said primary intermediate molded product, to form a secondary intermediate molded product; and the second blow-molding the secondary intermediate molded product to form the lightweight biaxially-oriented blow-molded bottle-shaped container.

### BRIEF DESCRIPTION OF THE DRAWINGS

FIG. 1 is a schematic partially cross sectional front view of the first embodiment of bottle-shaped container according to the invention.
FIG. 2 is a schematic plan view of the bottle-shaped container of FIG. 1.
FIG. 3 is a schematic bottom view of the bottle-shaped container of FIG. 1.
FIG. 4 is a schematic partially cross sectional front view of the second embodiment of bottle-shaped container according to the invention.
FIG. 5 is a schematic plan view of the bottle-shaped container of FIG. 4.
FIG. 6 is a schematic partially cross sectional front view of the third embodiment of bottle-shaped container according to the invention.
FIG. 7 is a schematic plan view of the bottle-shaped container of FIG. 6.
FIG. 8 is a schematic partially cross sectional front view of a preform, illustrating how it is heated according to the invention.
FIG. 9 is a schematic partially cross sectional view of a prior art bottle-shaped container.

### PREFERRED EMBODIMENT OF THE INVENTION

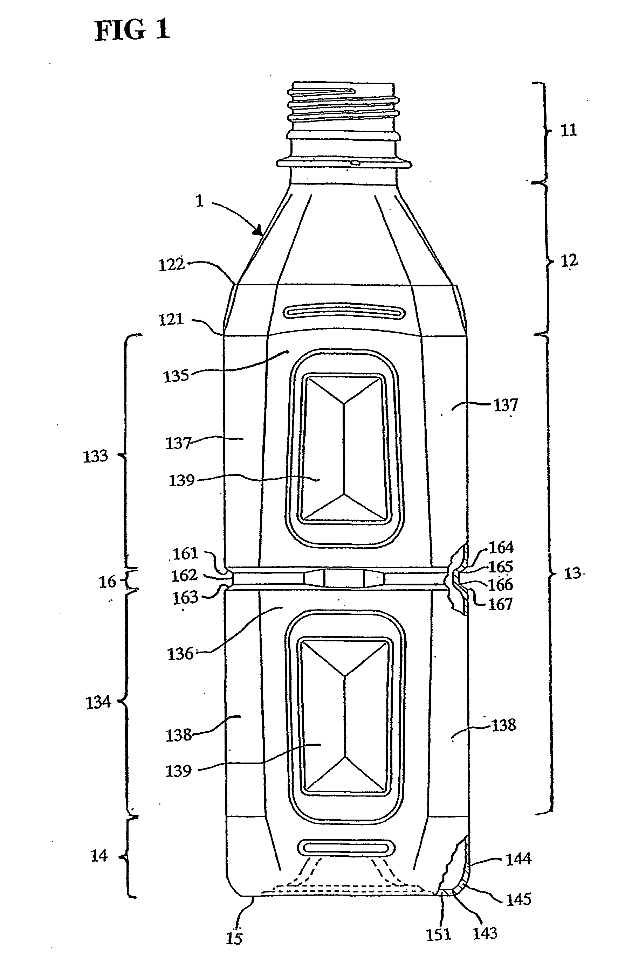

FIGS. 1 through 3 schematically illustrate a first embodiment of a bottle-shaped container according to the invention.

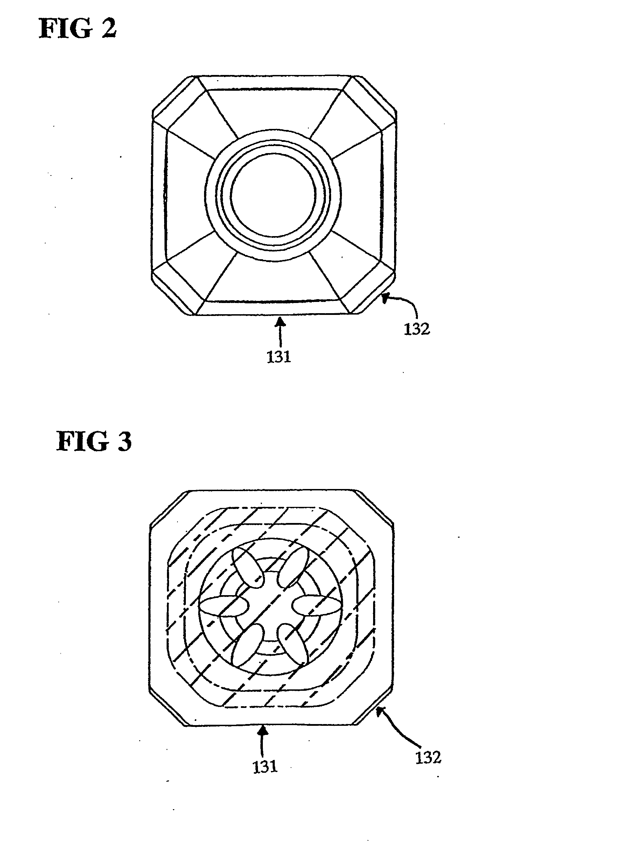

Referring to FIGS. 1 through 3, the bottle-shaped container 1 comprises a neck 11, a shoulder 12 extending downwardly from a lower end of the neck, gradually increasing its cross sectional surface, a body 13 extending vertically downwardly from a lower end of the shoulder 12, a heel 14 extending axially downwardly from a lower end of the body 13, and a bottom 15 that operates as grounding surface or bottom surface of the bottle-shaped container. The body 13 shows a substantially rectangular (or octangular when corners are beveled) cross section, and includes broad panel sections 131 and diagonally disposed narrow pillar sections 132 (FIGS. 2, 3). The body 13 is divided into an upper body 133 and a lower body 134 by a waist 16, which will be described hereinafter, so that each of the panel sections 131 is divided into an upper panel section 135 and a lower panel section 136, whereas each of the diagonal pillar sections 132 is divided into an upper pillar 137 and a lower pillar 138. The upper panel section 135 and the lower panel section 136 are provided with respective panels 139 for absorbing pressure reduction in the bottle-shaped container.

At a middle of the body 13 in an axial direction of the container, the body 13 is provided with the inwardly recessed waist 16 which shows a cross section smaller than that of any other part of the body 13. The waist 16 has an upper wall 161 extending inwardly and downwardly from lower ends of the upper panel sections 135 and those of the upper pillars 137, a vertical wall 162 extending vertically and downwardly from a lower end of the upper wall 161, and a lower wall 163 extending outwardly and downwardly from a lower end of the vertical wall 162 and connecting to upper ends of the lower panel sections 136 and those of the lower pillars 138.

A transversal cross section of the vertical wall 162 of the waist 16 is smaller than that of the upper body 133 and that of the lower body 134.

The waist 16 is apt to produce buckling deformation, when axial force is applied thereto from above of the bottle-shaped container. The waist 16 has an inflection point 164 between the upper body 133 and the upper wall 161, an inflection point 165 between the upper wall 161 and the vertical wall 162, an inflection point 166 between the vertical wall 162 and the lower wall 163, and an inflection point 167 between the lower wall 163 and the lower body 134. As far as the present invention is concerned, an "inflection point" appears in a longitudinal cross section of the bottle-shaped container, when a transversal cross sectional area of the container is changed. When axial force is applied to the container from above, buckling deformation can appear easily at inflection points, because it is considered that at such inflection points, the force gives an axial component and a component directed cross or orthogonal to the axial component.

Therefore, a buckling strength of the bottle-shaped container at the waist 16 can be increased by increasing wall thickness at the inflection points 164, 165, 166 and 167 from an average wall thickness of other blow-molded sections.

As a result of a series of experiments conducted by the inventor of the present invention, it was found that the strength of the bottle-shaped container is raised remarkably, when the wall thickness of the container is increased at the inflection points to at least 109% of the average wall thickness of the blow-molded sections of the container. Thus, according to the present invention, the wall thickness at the inflection points 164, 165, 166, 167 is formed to have at least 109% of the average wall thickness of the blow-molded sections of the container. If the wall thickness at the inflection point is less than 109%, a sufficient strength can not be obtained. While there is no particular upper limit for the wall thickness at the inflection point, it is preferably not more than 250%, because an amount of resin to be used is increased, and because an orientation magnification of the blow-molding is reduced to derive a whitening of the resin.

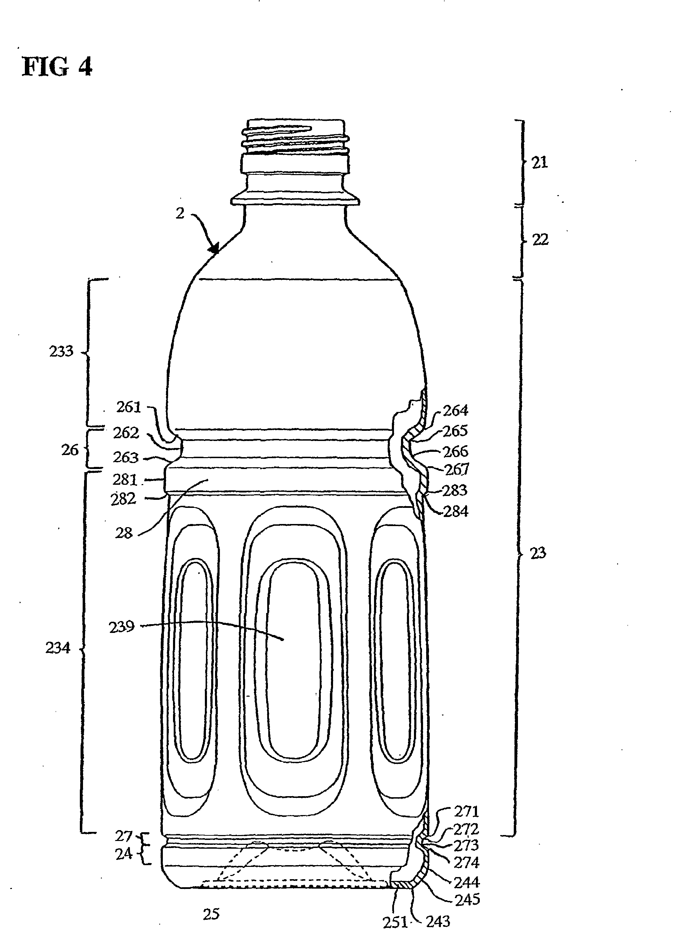

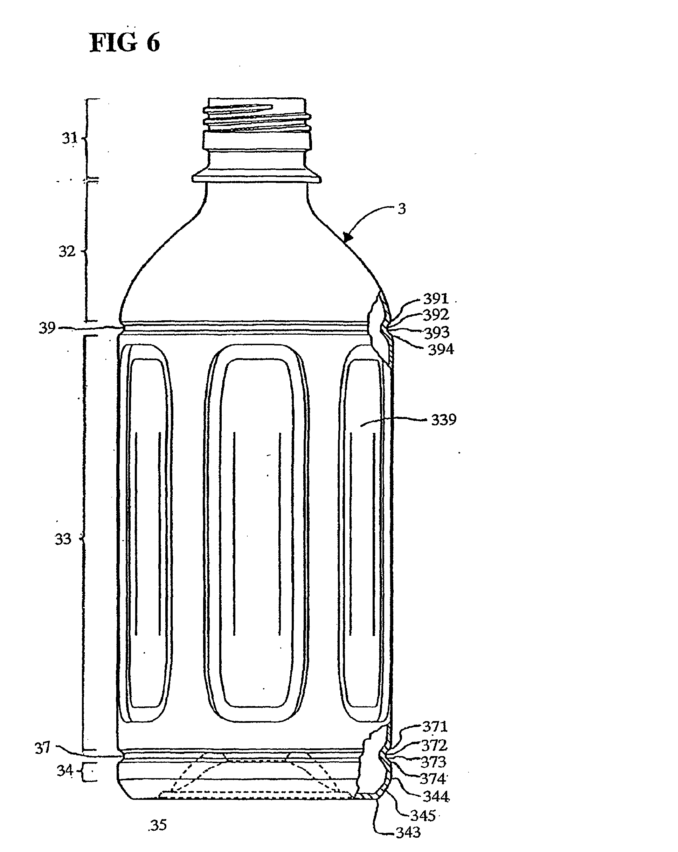

The bottle-shaped container according to the invention is manufactured by biaxially-oriented blow-molding. Therefore, if the inflection point has a wall thicker than that of its vicinity, the wall thickness varies or changes not stepwisely but gradually. For example, at and near the inflection point 164, the wall thickness varies gradually from the upper body 133 to the inflection point 164, not stepwisely, as shown in FIG. 1. Note that, in FIG. 1 (and in FIGS. 4 and 6), the wall thickness is emphatically illustrated.

Adjacent inflection points (such as 164 and 165) are located close to each other, and the wall thickness changes only gradually as described above. Thus, the wall thickness between an inflection point and the adjacent inflection point is substantially equal to the wall thickness at the inflection point. In other words, the wall thickness of the bottle-shaped container is gradually increased from the upper body 133 to become 109% or more of the average wall thickness of the oriented portion at the inflection point 164, remains substantially same (109% or more of average wall thickness) from the inflection point 164 to the inflection point 167, and then is gradually decreased from the inflection point 167 to the lower body 134.

The heel 14 is continuously extending from the lower body 134, and shows a transversal cross sectional area equal to or smaller than that of the lower body 134.

The bottom 15 has a bottom wall 151, which by turn has a bottom surface of the bottle-shaped container. The bottom shows a transversal cross sectional area (indicated by dotted broken lines in FIG. 3) smaller than that of the heel 14.

Between the heel 14 and the bottom 15, the container shows a curved wall whose cross section is gradually reduced toward the bottom 15. Between the heel 14 and the bottom 15, the container has an inflection point 143 where the bottom 15 starts turning toward the heel 14, an inflection point 144 where the heel 14 starts turning toward bottom wall 151, and an inflection point 145 at a middle between the inflection point 143 and the inflection point 144.

The heel 14 and the bottom 15 are also apt to produce buckling deformation at the inflection points 143, 144, 145, when axial force is applied thereto from above of the bottle-shaped container. When axial force is applied to the container, buckling deformation can appear easily at those inflection points 143, 144, 145, because it is considered that at those inflection points, the force gives an axial component and a component directed cross or orthogonal to the axial component.

Therefore, a buckling strength of the container at the heel 14 and the bottom 15 can be increased by increasing the thickness of the wall portion (bottom wall and its peripheral portion) including the inflection points 143, 144, 145 to at least 109% of the average wall thickness of other blow-molded sections.

The wall thickness of the bottom wall 151 may be increased entirely (in other words, the entire bottom surface) in addition to the inflection points 143, 144, 145. In this case, the entire bottom 15 can be strengthened.

The bottle-shaped container 1 as shown in FIGS. 1 through 3 includes "inflection point between a portion having a transversal cross sectional area and a portion having a different transversal cross sectional area in a cylindrical wall" in addition to the above, namely, an inflection point 121 between the shoulder 12 and the upper body 133, and an inflection point 122 located at a position slightly below a vertical middle point of the shoulder 12. The wall at these inflection points 121, 122 may be formed to be thicker. However, it is not necessary that the wall at the inflection points 121, 122 in the illustrated container 1 is formed to be thicker, because the bottle-shaped container 1 having the structure as shown n FIGS. 1 through 3 can absorb external force by elastic deformation mainly at and near the waist 16 and the bottom 15. For the purpose of the invention, based on a specific structure and a strength of a container, it should be considered whether or not a wall is formed to be thicker.

If inflection points appear entirely in a circumferential direction of a cylindrical wall, downward external force affects such inflection points as a component force orthogonal to the axial direction of the container. In other words, such force mainly affects cylindrical protrusion or recess entirely formed in circumferential direction. In the bottle-shaped container illustrated in FIGS. 1-3, such force does not affect inflection points arranged along a periphery of the panel 139 which is not entirely formed in circumferential direction, because the pillar sections 132 operate as beams. Thus, it is not necessary to form increase the wall thickness of the periphery of the panel 139 thicker.

A "cylindrical wall" as used herein does not necessarily mean that its transversal cross section is circular. It may show a substantially tetragonal cross sectional view as the bottle-shaped container illustrated in FIGS. 1 through 3 or some other polygonal cross sectional view.

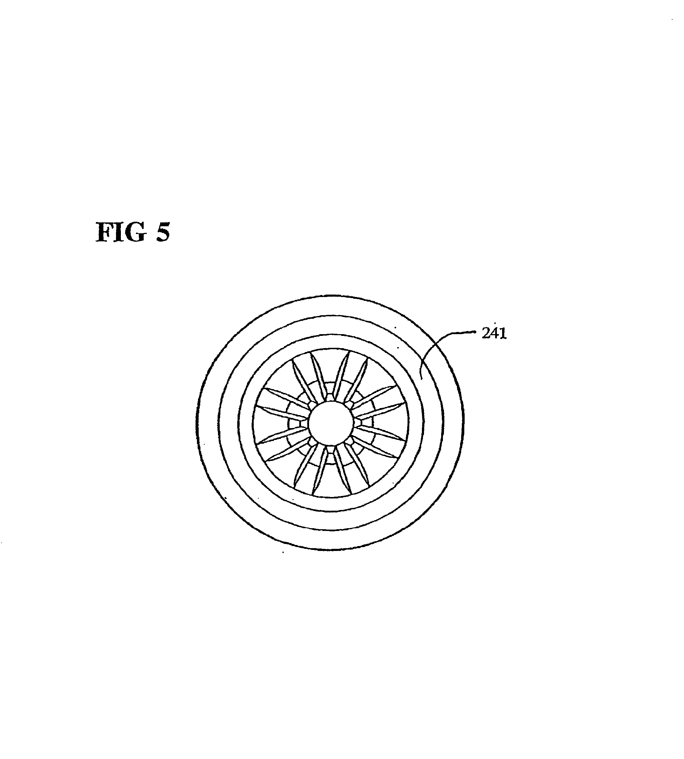

FIGS. 4 and 5 schematically illustrate a second embodiment of the invention. Referring to FIGS. 4 and 5, a bottle-shaped container 2 comprises a neck 21, a shoulder 22, a body 23, a heel 24 and a bottom 12. Unlike the first embodiment of bottle-shaped container illustrated in FIGS. 1 through 3, the embodiment of bottle-shaped container 2 illustrated in FIGS. 4 and 5 shows a substantially circular cross section, is formed with a recessed rib 27 between a lower end of the body 23 and the heel 24, and is formed with a projection 28 under and adjacent to a waist 26.

The waist 26 and the projection 28 are formed substantially at a middle of the body 23 in an axial direction of the container, so that the body 23 is divided into an upper body 233 and a lower body 234. The lower body 234 is formed with panels 239 for absorbing a pressure reduction that may arise in the bottle-shaped container.

The waist 26 comprises an upper wall 261 extending inwardly and downwardly from a lower end of the upper body 233, a vertical wall 262 extending vertically downwardly from a lower end of the upper wall 261, and a lower wall 263 extending outwardly and downwardly from a lower end of the vertical wall 262 and connecting to an upper end of the projection 263. The projection 28 includes a vertical wall section 281 extending vertically downward from a lower end of the lower wall 263 of the waist 26, and a lower wall 282 extending inwardly and downwardly from a lower end of the vertical wall 281 and connecting to the lower body 234. The waist 26 and the projection 28 have inflection points 264, 265, 266, 267, 283, 284.

In the second embodiment, the wall at the inflection points 264, 265, 266, 267, 283, 284 is formed to have at least 109% of the average thickness of the blow-molded sections of the container. The wall thickness is substantially same between the inflection point 264 and the inflection point 284, like the first embodiment, because the inflection points are located close to one another.

The bottle-shaped container 2 illustrated in FIGS. 4 and 5 has inflection points 243, 244, 245 between the heal section 24 and the bottom 25, like the first embodiment. The wall at these inflection points is formed to have at least 109% of the average thickness of the blow-molded sections of the container. The wall thickness is substantially same between the inflection point 243 and the inflection point 245, like the first embodiment

Like the first embodiment, a bottom wall 251 of the bottom 25 is entirely (in other words, an entire bottom surface) is formed to be 109% or more of the average wall thickness of the blow-molded sections of the container, so as to strengthen the entire bottom surface.

This embodiment differs from the first embodiment in that the bottle-shaped container 2 is provided with a recessed rib 27 disposed between a lower end of the body 23 and the heel 24. The recessed rib 27 has a diameter smaller than that of the lower body 234 and that of the heel 24, and includes inflection points 271, 272, 273, 274. At these inflection points, the wall thickness is 109% or more of the average wall thickness of the blow-molded sections of the container. The wall thickness is substantially same between the inflection point 271 and the inflection point 274.

With the above described construction, the container 2 is strengthened at the waist 26, at the recessed rib 27, and between the heel 24 and the bottom 25, so that the container shows a large strength against buckling.

Otherwise, the second embodiment is same as the first embodiment, and hence will not be described any further.

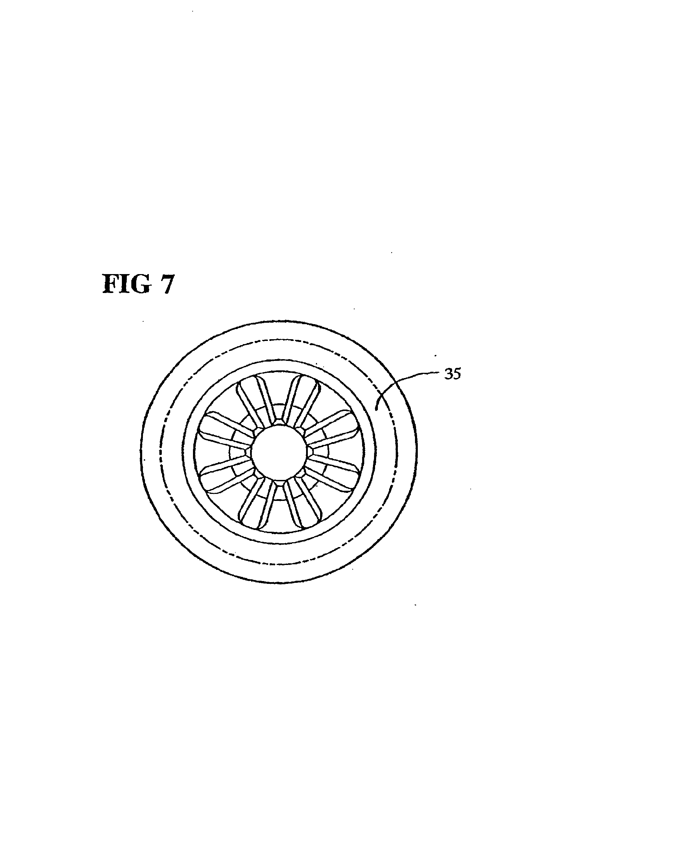

FIGS. 6 and 7 schematically illustrate a third embodiment of the invention. Referring to FIGS. 6 and 7, a bottle-shaped container 3 comprises a neck 31, a shoulder 32, a body 33, a heel 34 and a bottom 35, and shows a substantially circular cross section. The body 13 is formed with panels 339 for absorbing the pressure reduction that may arise in the bottle-shaped container. Each of the panels 339 extends from near an upper end of the body to near a lower end of the body. No waist is formed in the body 33 of the bottle-shaped container 3 of the third embodiment.

Like the first and second embodiments, the container 3 has inflection points 343, 344, 345 between the heal section 34 and the bottom 35. Like the bottle-shaped container 2 of the second embodiment, the bottle-shaped container 3 of this embodiment is provided with a recessed rib 37 between a lower end of the body 33 and the heel 34, and includes inflection points 371, 372, 373, 374. At these inflection points, a wall thickness is formed to be 109% or more of the average thickness of the blow-molded section.

Additionally, the bottle-shaped container 3 of this embodiment is provided with a recessed rib 39 between the shoulder 32 and the body 33. The recessed rib 39 includes inflection points 391, 392, 393, 394. At these inflection points, a wall thickness is formed to be 109% or more of the average thickness of the blow-molded section.

Like the first and second embodiments, the wall thickness is substantially same between the inflection point 371 and the inflection point 374, and also between the inflection point 391 and the inflection point 394.

Otherwise, the third embodiment is same as the first and second embodiments, and hence will not be described any further.

According to the first through third embodiments, the bottle-shaped container is manufactured by biaxially-oriented blow-molding a preform of polyethyleneterephthalate resin. Note that the present invention is not limited to polyethyleneterephthalate resin, and other synthetic resin material may also be used for the purpose of the invention.

In order to form a thicker wall only at an inflection point, the preform is less heated at a portion which corresponds to the inflection point in the bottle-shaped container. At the less-heated portion, the orientation magnification is smaller than that at the other parts, so that only at the inflection point, the wall is thicker.

Any conventional method of manufacturing a synthetic resin bottle-shaped container may be applied to the present invention except the above-described heat of the preform. The bottle-shaped container can be formed by an ordinary biaxially-oriented blow-molding process or a two-step blow-molding process as will be described below.

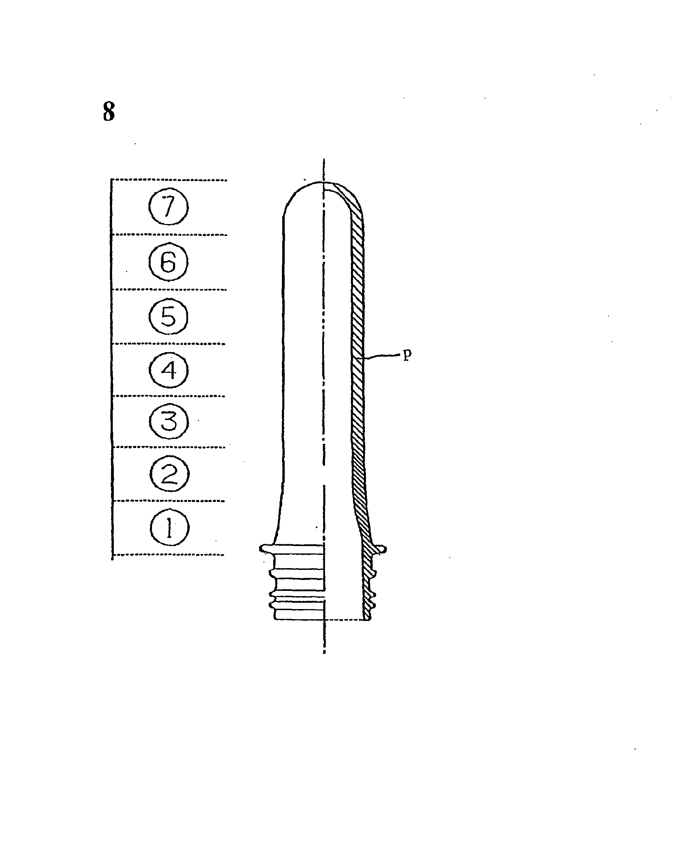

Now, the two-step blow-molding process for manufacturing a bottle-shaped container as illustrated in FIGS. 1 through 3 will be described below by referring to FIGS. 8 and 1. Firstly, a bottomed cylindrical preform of polyethyleneterephthalate is prepared.

The prepared preform is then heated to 70 to 130°C, preferably to 90 to 120°C, which is a temperature range that can effectively orient or draw the preform. In case of the illustrated embodiment, the preform is divided into sections to be heated by a heater (not shown), and in each of the sections, degree of heating is determined. In the section where corresponds to the portion of the container having thicker wall, the preform is less heated.

Then, thus heated preform is primary biaxially-oriented blow-molded to produce a primary intermediate molded product. In this case, a temperature of a primary metal mold to be used for the primary biaxially-oriented blow-molding is between 50 and 230°C, preferably between 70 and 180°C. An area magnification from the preform to the primary intermediate molded product is 4 to 22 times, preferably 6 to 15 times, so that the preform is sufficiently oriented to increase a resin density to raise a heat resistance of the container. The primary intermediate molded product is larger than the final product of bottle-shaped container. At a portion or part of a wall of the primary intermediate molded product to be molded to a portion or part of the thicker wall of the container (the waist 16 extending from the inflection point 164 to the inflection point 167, and a part between the inflection point 143 to the inflection point 145 in the container illustrated in Fig. 1), the wall of the primary intermediate molded product is formed to be thicker.

The thus obtained primary intermediate molded product is then heat-treated, to cause thermal contraction of the primary intermediate molded product, so as to form a secondary intermediate molded product. A temperature immediately after the heating is between 110 and 255°C, preferably between 130 and 200°C. As a result of the heating, the primary intermediate molded product is forced to contract, so that a residual stress produced in the primary intermediate molded product as a result of the primary biaxially-oriented blow-molding is released. Although the primary intermediate molded product contracts by heat in this heat-treatment step, at a part or portion of the secondary intermediate molded product to be molded to the portion or part of the thicker wall of the container, the wall is also thicker than the other blow-molded portions, because such part or portion is already thicker in the primary intermediate molded product.

The secondary intermediate molded product is secondary biaxially-oriented blow-molded to produce the final product of bottle-shaped container. A temperature of a secondary metal mold used in this secondary blow-molding is between 60 and 170°C, preferably between 80 and 150°C. An area magnification from the secondary intermediate molded product to the container is smaller than the area magnification from the preform to the primary intermediate molded product. Thus, residual stress produced in the secondary blow-molding is smaller than the residual stress produced in the primary blow-molding.

The thus obtained bottle-shaped container shows a resin density between 1.380 and 1.395g/cm³, and is highly heat-resistant. At the waist 16 (or between the inflection point 164 to the inflection point 167) and between the inflection point 143 and the inflection point 145, the bottle-shaped container illustrated in FIG. 1 has the wall having its thickness 109% or more of the average wall thickness of the blow-molded sections of the container, and the container has a large strength against buckling.

In each of the above described embodiments, the degree of heating the preform is differentiated from part to part in order to change the wall thickness. Alternatively, a preform may have thicker wall at a part where corresponds to the thicker wall of the bottle-shaped container, and may be subjected to an ordinary blow-molding process to produce the bottle-shaped container. Still alternatively, both method of the change of the degree of heating and the preform having the thicker wall may be combined to form the container.

### EXAMPLE

For forming the lightweight bottle-shaped container illustrated in Fig. 1, a preform of polyethyleneterephthalate was prepared.

The preform was then heated. The preform was divided to sections for heating. More specifically, the preform was divided into seven sections including the first section, the second section, ... and the seventh section, starting from the neck, in a manner as shown in FIG. 8. The degree of heating the third section corresponding to the waist 16 of the final product of bottle-shaped container was made to be 25% smaller than the average output of the heater (or 75% of the output), and the degree of heating the sixth section corresponding to a part extending inwardly from the inflection point 143 to a bottom center was made to be 17% smaller than the average output of the heater (or 83% of the output). With the above arrangement, the preform was heated at a temperature range between 90 and 120° .

The thus heated preform was then primary biaxially-oriented blow-molded in a primary metal mold heated to 150°C, to obtain the primary intermediate molded product. The primary intermediate molded product was then heated to 160°C, to cause contraction of the primary intermediate molded product, so as to obtain the secondary intermediate molded product. The secondary intermediate molded product was secondary blow-molded in the secondary metal mold heated to 95°C, to obtain a final product of bottle-shaped container having a volume of 500ml.

The wall thickness of the obtained bottle-shaped container was measured to find that the average wall thickness of the blow-molded portions was 0.330mm, whereas the wall thickness was 0.359mm (or 109% of the average wall thickness) at the waist 16 and 0.363mm (or 110% of the average wall thickness) between the heel 14 and the bottom 15. The critical strength of the bottle-shaped container against buckling was 324N.

While the wall thickness was 109% at the waist 16 and 110% between the heel 14 and the bottom 15 was 110% relative to the average wall thickness of the blow-molded parts in the above-described EXAMPLE, the wall thickness can vary depending on if the bottle-shaped container has a waist and/or one or more ribs or not as well as on a physical structure of the bottle-shaped container, and the present invention is by no means limited to the above listed specific numerical values.

### COMPARATIVE EXAMPLE

For the purpose of comparison, the bottle-shaped container was formed by the above-described process except that the output of the heater was not reduced for the third and sixth sections. The wall thickness was 105% at the waist and 107% between the heel and the bottom relative to the average wall thickness of the blow-molded parts. The critical strength of the bottle-shaped container against buckling was 255N.

The above-described EXAMPLE and COMPARATIVE EXAMPLE showed a large difference of critical strength against buckling, if compared with the difference of wall thickness between them, presumably because the critical strength against buckling is substantially proportional to square of the wall thickness.

According to the present invention, wall thickness is increased to 109% or more of an average wall thickness of blow-molded part of the wall at an inflection point between a portion having a transversal cross sectional area and a portion having a different transversal cross sectional area in a cylindrical wall. Thus, the critical strength of the bottle-shaped container against buckling is increased. Thus, no buckling deformation occurs even if axial force is applied to the container to produce components perpendicular to the axial direction of the container at the inflection point. Additionally, since the blow-molded part has thin wall except the inflection point, the volume of synthetic resin to be used for manufacturing the bottle-shaped container can be reduced.

If the wall at the inflection point between the heel and the bottom wall has the wall thickness of 109% or more of the average thickness of the blow-molded part, the critical strength against buckling is increased at or near the bottom wall.

If the entire bottom wall has the wall thickness of 109% or more of the average wall thickness of the blow-molded part, the critical strength against buckling is increased in the entire bottom wall.

If the wall at the inflection point between the shoulder and the body has the wall thickness of 109% or more of the average thickness of the blow-molded part, the critical strength against buckling is increased at the inflection point between the shoulder and the body.

If the wall at the inflection points between the upper body and the waist and between the lower body and the waist (in other words, the waist wall) has the wall thickness of 109% or more of the average thickness of the blow-molded part, the critical strength against buckling is increased at the waist.

In another aspect of the present invention, it is possible to obtain a bottle-shaped container showing a large critical strength against buckling by changing the degree of heating at different parts of the preform. Since the method of manufacturing a bottle-shaped container according to the invention is same as conventional manufacturing methods except that the preform is heated to varying degree, the bottle-shaped container can be obtained easily without any problem.

In this case, if the bottle-shaped container is molded by two step biaxially-oriented blow-molding process, the residual internal stress produced in the primary biaxially-oriented blow-molding step is released by heat-treatment, so that the obtained bottle-shaped container is highly heat-resistant.

## Claims

1. A lightweight bottle-shaped container made of synthetic resin and formed by biaxially-oriented blow-molding, **characterized in that** a wall thickness is increased to 109% or more of an average wall thickness of blow-molded part of a wall at an inflection point (121, 122, 143-145, 164-167, 243-245, 264-267, 271-274, 283, 284, 343-345, 371-374, 391-394) between a portion having a transversal cross sectional area and a portion having a different transversal cross sectional area in a cylindrical wall.

2. The container according to claim 1, wherein
the wall thickness gradually changes from the inflection point to other blow-molded part of the wall.

3. The container according to claim 1 or 2, wherein
said bottle-shaped container comprises a neck (11, 21, 31), a shoulder (12, 22, 32), a body (13, 23, 33), a heel (14, 24, 34) and a bottom (15, 25, 35), and
said inflection point (143-145, 243-245, 343-345) is between the heel (14, 24, 34) and a bottom surface of the bottom (15, 25, 35).

4. The container according to claim 3, wherein
the wall thickness of the entire bottom surface (151, 251) is at least 109% of said average wall thickness.

5. The container according to claim 3, wherein
the inflection point (121) is between the shoulder (12) and the body (13).

6. The container according to claim 3, wherein
the body (13, 23) is formed with a waist (16, 26),
the body (13, 23) comprises an upper body (133, 233) located above the waist and a lower body (134, 234) located below the waist,
the inflection point (164, 264) is between the upper body (133, 233) and the waist (16, 26), and
the inflection point (167, 267) is also between the lower body (134, 234) and the waist (16, 26).

7. A method of manufacturing a lightweight bottle-shaped container made of synthetic resin, comprising heating a preform, and biaxially-oriented blow-molding the preform, **characterized in that**
the preform is less heated at a part corresponding to an inflection point (121, 122, 143-145, 164-167, 243-245, 264-267, 271-274, 283, 284, 343-345, 371-374, 391-394) between a portion having a transversal cross sectional area and a portion having a different transversal cross sectional area in a cylindrical wall of the container, so that an area magnification from the preform to the blow-molded product is smaller at the less-heated part, so that at the inflection point, a wall-thickness has 109% or more of an average wall thickness of a blow-molded portion.

8. The method according to claim 7, comprising
heating the preform,
primary biaxial-orientation blow-molding the preform in a primary metal mold, to form a primary intermediate molded product,
causing thermal contraction of the primary intermediate molded product by heating said primary intermediate molded product, to form a secondary intermediate molded product, and
the second blow-molding the secondary intermediate molded product to form the lightweight biaxially-oriented blow-molded bottle-shaped container.
